(19) Europäisches Patentamt
European Patent Office
Office européen des brevets

(11) **EP 3 018 473 B1**

(12) **EUROPEAN PATENT SPECIFICATION**

(45) Date of publication and mention
of the grant of the patent:
**25.04.2018 Bulletin 2018/17**

(51) Int Cl.:
**G01N 30/14** *(2006.01)*          **G01N 30/88** *(2006.01)*
**C01B 3/38** *(2006.01)*

(21) Application number: **14192567.7**

(22) Date of filing: **10.11.2014**

(54) **Method for characterizing the hydrocarbon content of a reformate stream**

Verfahren zur Charakterisierung des Kohlenwasserstoffgehalts eines Reformatstroms

Procédé de caractérisation de la teneur en hydrocarbures d'un flux de reformat

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.05.2016 Bulletin 2016/19**

(73) Proprietor: **Air Products and Chemicals, Inc.**
**Allentown, PA 18195-1501 (US)**

(72) Inventor: **MacConnell, Matthew H.**
**Orefield, PA 18069 (US)**

(74) Representative: **Schwabe - Sandmair - Marx**
**Patentanwälte Rechtsanwalt**
**Partnerschaft mbB**
**Joseph-Wild-Straße 20**
**81829 München (DE)**

(56) References cited:
**WO-A1-2009/090351          US-A1- 2002 178 806**
**US-A1- 2010 224 834**

## Description

### BACKGROUND

The present invention relates to steam-hydrocarbon reforming processes in general, and more specifically to a method for characterizing the hydrocarbon content in a reformate sample stream.

Industry desires to improve reformer energy efficiency and productivity.

To improve energy efficiency and productivity, measurements of hydrocarbon content in various intermediate streams can be made and control of the reforming process improved through use of the measurements.

For example, it is found to be useful to measure the hydrocarbon content of intermediate process streams of a steam-hydrocarbon reforming process so that the steam flow rate in the feed to the process is adjusted to provide the desired conversion of hydrocarbon feedstock with improved energy efficiency.

The challenge to measuring the hydrocarbon content of intermediate process stream of a steam-hydrocarbon reforming process is due to the high pressure and high temperature of the intermediate stream along with the high water content and ammonia content. Commercial sampling systems designed for measuring the flue gas of combustion systems are not suited for measuring intermediate streams from a steam-hydrocarbon reforming process.

US 2010/0224834 A1 discloses a method for characterizing a hydrocarbon content of a hydrocarbon-containing mixture. The hydrocarbon-containing mixture is formed from natural gas and/or refinery offgas and may contain various hydrocarbons, and also non-hydrocarbons such as hydrogen, nitrogen, argon, carbon dioxide, carbon monoxide, water vapor and various other gases. The method includes the measurement of a composition-dependent bulk property such as a heating value, thermal conductivity, viscosity, molar heat capacity, specific capacity and sonic velocity and also of the concentration of at least one non-hydrocarbon component in the mixture. The problem of measuring the hydrocarbon content of a process stream of a steam-hydrocarbon reforming process under high pressure and high temperature along with high water and ammonia contents is solved by the employment of radiation, capacitive or thermal detectors whereas gas chromatography is considered to result in delay and high costs.

### BRIEF SUMMARY

The present invention relates to a method for characterizing a hydrocarbon content of a reformate sample stream.

The method comprises:

(a) withdrawing the reformate sample stream from a steam-hydrocarbon reforming process, the reformate sample stream comprising $CH_4$, $H_2O$, $CO$, $NH_3$, and $H_2$;

(b) cooling the reformate sample stream in a first heat exchanger to condense a portion of the $H_2O$ in the reformate sample stream thereby forming a liquid fraction and a vapor fraction;

(c) dividing the reformate sample stream from step (b) into a vapor fraction-enriched stream having a time-averaged mass flow rate, $F_1$, and a liquid fraction-enriched stream having a time-averaged mass flow rate, $F_2$;

(d) cooling the vapor fraction-enriched stream to within a temperature ranging from 0°C to 10°C or ranging from 2°C to 7°C to condense $H_2O$ in the vapor fraction-enriched stream;

(e) removing at least a portion of the condensed $H_2O$ from the vapor fraction-enriched stream from step (d);

(f) passing the vapor fraction-enriched stream from step (e) to an ammonia removal unit to remove $NH_3$ from the vapor fraction-enriched stream; and

(g) passing at least a first portion of the vapor fraction-enriched stream from step (f) to a chemical component analyzer to measure the hydrocarbon content in the at least a first portion of the vapor fraction-enriched stream.

The vapor fraction-enriched stream from step (f) may be passed to a dryer to further remove $H_2O$ in the vapor fraction-enriched stream prior to passing the at least a first portion of the vapor fraction-enriched stream to the chemical component analyzer.

The reformate sample stream may have an $H_2O$ mole fraction greater than 0.35 or greater than 0.5.

$F_1$ and $F_2$ may be controlled such that

$$\frac{F_1}{F_1 + F_2} \leq 0.2 \,.$$

The method may further comprise passing the reformate sample stream through a conduit from a reformate sample stream source to the first heat exchanger while heating the reformate sample stream in the conduit in an amount sufficient to prevent condensation of the $H_2O$ in the reformate sample stream in the conduit.

The at least a portion of the condensed $H_2O$ from the vapor fraction-enriched stream may be removed using a liquid drain trap.

The at least a portion of the condensed $H_2O$ from the vapor fraction-enriched stream may be removed using a liquid drain trap and a coalescing filter.

The ammonia removal unit may comprise phosphoric acid.

The method may further comprise: rejecting a second portion of the vapor fraction-enriched stream from step (f) where the second portion is not passed to the chemical component analyzer, wherein the at least a first portion of the vapor fraction-enriched stream has a time-averaged mass flow rate $V_1$, the second portion of the vapor fraction-enriched stream has a time-averaged mass flow rate, $V_2$, where $\dfrac{V_1}{V_1 + V_2} \leq 0.1$ or

$$0 < \frac{V_1}{V_1 + V_2} \leq 0.1.$$

The vapor fraction-enriched stream may be cooled in step (d) in a second heat exchanger wherein the second heat exchanger comprises a vortex tube wherein compressed air is introduced into the vortex tube to provide the cooling of the vapor fraction-enriched stream.

The dryer may be a membrane dryer.

Dry $N_2$ or dry air may be introduced into the membrane dryer as a purge gas to assist in the removal of $H_2O$ from the vapor fraction-enriched stream.

The chemical component analyzer may be a gas chromatograph.

The hydrocarbon content measured in step (g) may be a C2+ hydrocarbon content in the at least a first portion of the vapor fraction-enriched stream.

The method may further comprise:

> passing a feed stream to a reactor, the feed stream containing hydrocarbons including C2+ hydrocarbons;

> reacting the feed stream in the reactor under reaction conditions sufficient to react the feed stream and form a reactor product stream comprising $CH_4$, $H_2O$, CO, $NH_3$, and $H_2$;

> withdrawing the reactor product stream from the reactor;

> dividing the reactor product stream into at least two portions, namely a first reactor product stream and the reformate sample stream, thereby withdrawing the reformate sample stream from the steam-hydrocarbon reforming process in step (a); and

> providing the first reactor product stream to a processing unit of the steam-hydrocarbon reforming process for further processing.

The reactor may be a prereformer or a catalytic steam-hydrocarbon reformer or a shift reactor.

The processing unit may be a catalytic steam-hydrocarbon reformer or a shift reactor or a separation unit for producing a hydrogen-enriched product by a separation process.

The reactor may be a prereformer and the processing unit a catalytic steam-hydrocarbon reformer, or

> the reactor may be a catalytic steam-hydrocarbon reformer and the processing unit a shift reactor or a separation unit for producing a hydrogen-enriched product by a separation process or a shift reactor, or

> the reactor may be a shift reactor and the processing unit a separation unit for producing a hydrogen-enriched product by a separation process.

The feed stream may contain steam, the feed stream having a molar flow rate of hydrocarbons, $F_{HC}$, and a molar flow rate of steam, $F_S$, thereby defining a ratio, $F_S/F_{HC}$, of the molar flow rate of steam to the molar flow rate of hydrocarbons in the feed stream, wherein the process further comprises:

> controlling the ratio of the molar flow rate of steam to the molar flow rate of hydrocarbons based on the measured hydrocarbon content in the at least a first portion of the vapor fraction-enriched stream.

## BRIEF DESCRIPTION OF SEVERAL VIEWS OF THE DRAWINGS

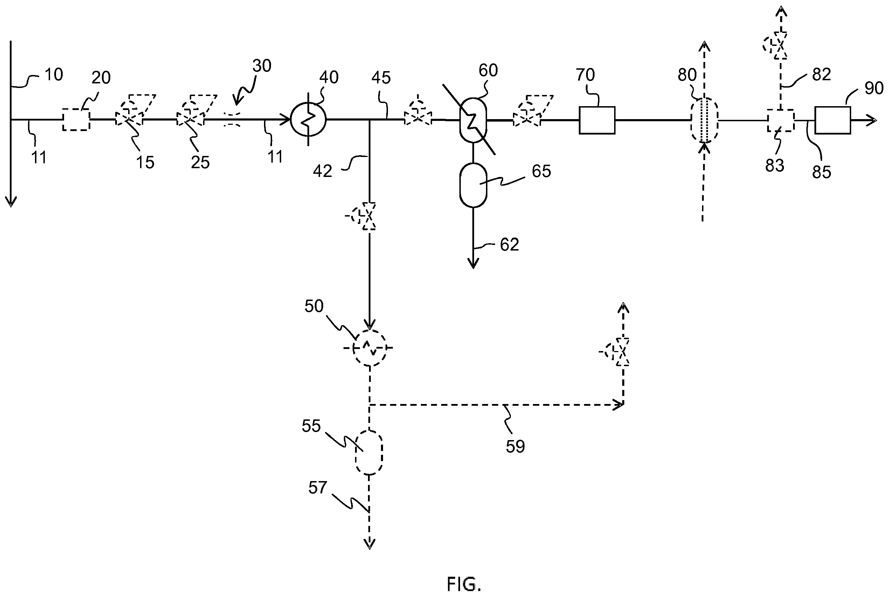

The sole figure is a process flow diagram for the method for characterizing the hydrocarbon content of a reformate sample stream.

## DETAILED DESCRIPTION OF THE PREFERRED EMBODIMENTS

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention, it being understood that various changes may be made in the function and arrangement of elements without departing from scope of the invention as defined by the claims.

The articles "a" and "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

The adjective "any" means one, some, or all indiscriminately of whatever quantity.

The phrase "at least a portion" means "a portion or all." The at least a portion of a stream may have the same composition with the same concentration of each of the species as the stream from which it is derived. The at least a portion of a stream may have a different concentration of species than that of the stream from which it is derived. The at least a portion of a stream may include only specific species of the stream from which it is derived.

As used herein, "first," "second," "third," etc. are used to distinguish from among a plurality of steps and/or features, and is not indicative of the total number, or relative position in time and/or space unless expressly stated as such.

The term "depleted" means having a lesser mole % concentration of the indicated gas than the original stream from which it was formed. "Depleted" does not mean that the stream is completely lacking the indicated gas.

The terms "rich" or "enriched" means having a greater mole % concentration of the indicated gas than the original stream from which it was formed.

The present invention relates to a method for characterizing a hydrocarbon content of a reformate sample stream, where the reformate sample stream comprises $CH_4$, $H_2O$, CO, $NH_3$, and $H_2$. The reformate sample stream may have an $H_2O$ mole fraction greater than 0.35 or greater than 0.5.

The method is discussed with reference to the sole figure.

The hydrocarbon content may be expressed in any convenient form, for example as a concentration of the various hydrocarbon species on a dry basis, as a ratio of one hydrocarbon species to the total hydrocarbon species content, or as a ratio of one species to another species.

The reformate sample stream source 10 may be from any location in a reforming process where hydrocarbon feedstock has undergone some reaction by reforming, for example, from a location between a prereformer and a catalytic steam-hydrocarbon reformer, from a location between a catalytic steam-hydrocarbon reformer and a shift reactor, or between a shift reactor and a pressure swing adsorber.

Since the pressure of the reformate sample stream 11 will typically be greater than that desired for measurement, the pressure of the reformate sample stream 11 may be reduced through any number of valves 15, 25, orifices 30, and the like. The reformate sample stream 11 may be filtered in filter 20, if desired.

The method comprises cooling the reformate sample stream 11 in a first heat exchanger 40 to condense a portion of the $H_2O$ in the reformate sample stream 11 thereby forming a liquid fraction and a vapor fraction. The first heat exchanger 40 may be an ambient air-cooled heat exchanger.

The reformate sample stream 11 may be passed through a conduit from the reformate sample stream source to the first heat exchanger 40 while heating the reformate sample stream 11 in the conduit in an amount sufficient to prevent condensation of the $H_2O$ in the reformate sample stream in the conduit, i.e. using trace heating.

The method comprises dividing the reformate sample stream 11 into a vapor fraction-enriched stream 45 having a time-averaged mass flow rate $F_1$, and a liquid fraction-enriched stream 42 having a time-averaged mass flow rate $F_2$. The reformate sample stream may be divided by any known means, for example a pipe "T", with flow rates of each steam controlled by one or more valves.

Time-averaged mass flow rates are calculated in the conventional way from the generalized equation:

$$\overline{\xi} = \frac{1}{\tau} \int_{t_1}^{t_2} \xi(t) dt$$

where $\overline{\xi}$ is the time-averaged mass flow rate, $\xi$ is the instantaneous mass flow rate, t is time, where the specified quantity (i.e. first, second, third, etc.) flows from $t = t_1$, to $t = t_2$, where $t = t_1$ at the beginning of the flow of the specified quantity, $t = t_2$ at the end of the flow of the specified quantity, and where $\tau = t_2 - t_1$.

The time-averaged mass flow rates $F_1$ and $F_2$ may be controlled such that $\dfrac{F_1}{F_1 + F_2} \le 0.2$ where $F_1$ is nonzero. This means that only a reduced fraction of the original stream is used and further processed for later measurements in the chemical component analyzer 90. This allows for a larger flow rate of the sample passing from the source to the first heat exchanger 40 which has the advantages of decreasing the risk of condensation in the conduit from the source, increasing the sample response speed by decreasing the residence time of the sample gas from the source to the conditioning system and chemical component analyzer 90. This also has the advantage of concentrating the hydrocarbon components.

Since ammonia is soluble in liquid water, some of the ammonia present in the reformate sample stream 11 is removed with the liquid fraction-enriched stream 42. An advantage of taking the larger sample and condensing water with ammonia contained therein, is that a larger percentage of the ammonia is removed with the liquid fraction-enriched stream 42, thereby depleting ammonia in the vapor fraction-enriched stream 45.

Condensing water from the the reformate sample stream 11 followed by dividing the stream into the liquid fraction-enriched stream 42 and the vapor fraction-enriched stream 45 has a combined effect that reduces the ammonia loading to the ammonia removal unit 70, discussed below.

The method comprises cooling the vapor fraction-enriched stream 45 to within a temperature ranging from 0°C to 10°C or ranging from 2°C to 7°C to condense $H_2O$ in the vapor fraction-enriched stream. The vapor fraction-enriched stream may be cooled in a second heat exchanger 60 wherein the second heat exchanger 60 comprises a vortex tube wherein compressed air is introduced into the vortex tube to provide the cooling of the vapor fraction-enriched stream.

The method comprises removing at least a portion of the condensed $H_2O$ 62 from the vapor fraction-enriched stream 45 thereby forming the vapor fraction-enriched stream 45 with a portion of water removed therefrom. The at least a portion of the condensed $H_2O$ 62 may be removed from the vapor fraction-enriched stream 45 using a liquid drain trap 65 and optionally a coalescing filter (not shown). Liquid drain traps are available commercially, for example, from Armstrong International.

The two-stage condensation in the first heat exchanger 40 and second heat exchanger 60 addresses the problem related to the high water content in reformate streams. Unexpectedly, the water removal does not appreciably affect the concentration of the hydrocarbons in the vapor fraction-enriched stream 45.

The method comprises passing the vapor fraction-enriched stream 45 having a portion of water removed therefrom to an ammonia removal unit 70 to remove $NH_3$ from the vapor fraction-enriched stream 45 thereby forming the vapor fraction-enriched stream 45 with ammonia removed therefrom. The ammonia may be removed by any known means. The ammonia may, for example, be removed by chemical reaction with a scrubber media in ammonia scrubber 70. Any scrubber media known to remove ammonia may be used. The ammonia scrubber media may comprise phosphoric acid. The ammonia scrubber 70 may be, for example, an AS™-Series Ammonia Scrubber commercially available from Perma Pure, LLC.

Ammonia should be removed because ammonia may deactivate the membrane dryer and shorten the active life of the membrane dryer. Ammonia may also cause adhesives inside the gas chromatograph to fail if samples having greater than 100 ppmv are introduced into the gas chromatograph.

While it may be desirable to remove all of the ammonia, low ppmv levels of ammonia may still be present in the vapor fraction-enriched stream after passing the stream through the ammonia removal unit 70. Since complete removal of ammonia may not be possible, and substantial removal of ammonia (< 10 or < 100 ppmv) is acceptable for downstream devices, as used herein, "to remove ammonia" does not mean complete removal of ammonia. Ammonia may be removed in an amount such that the vapor fraction-enriched stream has an ammonia content less than 5 ppmv.

The method may further comprise passing the vapor fraction-enriched stream 45 from the ammonia removal unit 70 to a dryer 80 to further remove $H_2O$ in the vapor fraction-enriched stream 45 thereby forming the vapor fractio-enriched stream 45 with further removal of water. The dryer 80 may be a membrane dryer. The dryer 80 may be a PRISM® Membrane Dryer commercially available from Air Products and Chemicals, Inc. or a membrane dryer commercially available from Perma Pure. When the dryer 80 is a membrane dryer, dry $N_2$ or dry air may be introduced into the membrane dryer as a purge gas to assist in the removal of $H_2O$ from the vapor fraction-enriched stream 45.

While it may be desirable to remove all of the water, low vol. % levels of water may still be present in the vapor fraction-enriched stream after passing the stream through the dryer 80. Since complete removal of water may not be possible, and substantial removal of water (< 1 vol. %) is acceptable for downstream devices, as used herein, "to further remove water" does not mean complete removal of water. Water may be removed in an amount such that the vapor fraction-enriched stream has a water content less than about 0.3 vol.%.

The vapor fraction-enriched stream 45 may be passed to a filter 83, where a filtered first portion 85 is passed to the chemical component analyzer 90 and an unfiltered second portion 82 is rejected to a vent and flared or otherwised disposed of. The method may comprise rejecting the second portion 82 of the vapor fraction-enriched stream 45 where the second portion is not passed to the chemical component analyzer 90. The first portion 85 of the vapor fraction-enriched stream may be introduced intermittently into the chemical component analyzer 90. The first portion 85 of the vapor fraction-enriched stream 45 has a time-averaged mass flow rate, $V_1$, and the second portion of the vapor fraction-enriche stream has a time-averaged mass flow rate, $V_2$. (Time-averaged mass flow rates are defined above).

The time-averaged mass flow rates $V_1$ and $V_2$

may be controlled such that $\dfrac{V_1}{V_1 + V_2} \le 0.1$ where $V_1$ is nonzero. This means that only a reduced fraction of the vapor-fraction enriched stream is used in the chemical component analyzer 90.

The method further comprises passing at least a first portion 85 of the vapor fraction-enriched stream 45 from the dryer 80 to a chemical component analyzer 90 to measure the hydrocarbon content in the at least a first portion 85 of the vapor fraction-enriched stream 45. The C2+ hydrocarbon content may be, for example, a concentration of C2+ hydrocarbons, or a ratio with one of the other components in the first portion 85.

The chemical component analyzer 90 may be a gas chromatograph (GC). The gas chromatographs have been found to be accurate for measuring hydrocarbon concentrations from ppm levels to percent levels (trace to major species).

The chemical component analyzer 90 may be a mass spectrometer. The chemical component analyzer 90 may be a non-methane hydrocarbon analyzer, which uses a flame ionization detector, for example, as available from Baseline - MOCON, Inc. The chemical component analyzer 90 may be a tunable diode laser analyzer, for example, as available from Yokogawa.

The liquid fraction-enriched stream 42 may be further cooled in heat exchanger 50, which may be an air-cooled heat exchanger. Water 57 may be collected in a liquid drain trap 55 and disposed of. An ammonia-containing vapor stream 59 may be vented or flared or otherwise disposed of. The benefit of further removing water from the liquid fraction-enriched stream 42 is that the ammonia-containing vapor stream 59 can be more reliably flared.

**Claims**

1. A method for characterizing a hydrocarbon content of a reformate sample stream (11), the method comprising:

    (a) withdrawing the reformate sample stream (11) from a steam-hydrocarbon reforming process, the reformate sample stream (11) comprising $CH_4$, $H_2O$, $CO$, $NH_3$, and $H_2$;
    (b) cooling the reformate sample stream (11) in a first heat exchanger (40) to condense a portion of the $H_2O$ in the reformate sample stream (11) thereby forming a liquid fraction and a vapor fraction;
    (c) dividing the reformate sample stream from step (b) into a vapor fraction-enriched stream (45) having a time-averaged mass flow rate, $F_1$, and a liquid fraction-enriched stream (42) having a time-averaged mass flow rate, $F_2$;
    (d) cooling the vapor fraction-enriched stream (45) to within a temperature ranging from 0°C to 10°C or ranging from 2°C to 7°C to condense $H_2O$ in the vapor fraction-enriched stream;
    (e) removing at least a portion of the condensed $H_2O$ (62) from the vapor fraction-enriched stream (45) from step (d);
    (f) passing the vapor fraction-enriched stream (45) from step (e) to an ammonia removal unit (70) to remove $NH_3$ from the vapor fraction-enriched stream (45); and
    (g) passing at least a first portion (85) of the vapor fraction-enriched stream (45) from step (f) to a chemical component analyzer (90) to measure the hydrocarbon content in the at least a first portion (85) of the vapor fraction-enriched stream (45).

2. The method of claim 1 wherein the vapor fraction-enriched stream from step (f) is passed to a dryer to further remove $H_2O$ in the vapor fraction-enriched stream prior to passing the at least a first portion of the vapor fraction-enriched stream to the chemical component analyzer.

3. The method of claim 1 or claim 2 wherein $F_1$ and $F_2$ are controlled such that $\dfrac{F_1}{F_1 + F_2} \leq 0.2$ .

4. The method of any one of claims 1 to 3 further comprising passing the reformate sample stream (11) through a conduit from a reformate sample stream source to the first heat exchanger (40) while heating the reformate sample stream (11) in the conduit in an amount sufficient to prevent condensation of the $H_2O$ in the reformate sample stream in the conduit.

5. The method of any one of claims 1 to 4 wherein the at least a portion of the condensed $H_2O$ (62) from the vapor fraction-enriched stream is removed using a liquid drain trap (65).

6. The method of any one of claims 1 to 4 wherein the at least a portion of the condensed $H_2O$ (62) from the vapor fraction-enriched stream is removed using a liquid drain trap (65) and a coalescing filter.

7. The method of any one of claims 1 to 6 wherein the ammonia removal unit comprises phosphoric acid.

8. The method of any one of claims 1 to 7 further comprising: rejecting a second portion (82) of the vapor fraction-enriched stream (45) from step (f) where the second portion is not passed to the chemical component analyzer (90), wherein the at least a first portion (85) of the vapor fraction-enriched stream (45) has a time-averaged mass flow rate $V_1$, the second portion of the vapor fraction-enriched stream has a time-averaged mass flow rate, $V_2$, where $\dfrac{V_1}{V_1 + V_2} \leq 0.1$ .

9. The method of any one of claims 1 to 8 wherein the vapor fraction-enriched stream is cooled in step (d) in a second heat exchanger wherein the second heat exchanger comprises a vortex tube wherein compressed air is introduced into the vortex tube to provide the cooling of the vapor fraction-enriched stream.

10. The method of any one of claims 1 to 9 wherein the dryer is a membrane dryer.

11. The method of claim 10 wherein dry $N_2$ or dry air is introduced into the membrane dryer (80) as a purge gas to assist in the removal of $H_2O$ from the vapor

fraction-enriched stream (45).

12. The method of any one of claims 1 to 11 wherein the reformate sample stream (11) has an $H_2O$ mole fraction greater than 0.35 or greater than 0.5.

13. The method of any one of claims 1 to 12 wherein the chemical component analyzer is a gas chromatograph.

**Patentansprüche**

1. Verfahren zur Charakterisierung eines Kohlenwasserstoffgehalts eines reformierten Stichprobenstroms, das Verfahren umfassend:

   (a) Entziehen eines reformierten Stichprobenstroms (11) aus einem Kohlenwasserstoffdampfreformationsprozess, wobei der reformierte Stichprobenstrom (11) CH4, H2O, CO, NH3 und H2 umfasst;
   (b) Abkühlen des reformierten Stickprobenstroms (11) in einem ersten Wärmetauscher (40) um einen Teile des H2O in dem reformierten Stichprobenstrom (11) zu kondensieren und dabei einen flüssigen Teil und einen Dampfteil zu bilden;
   (c) Teilen des reformierten Stichprobenstroms von Schritt (b) in einen teilweise dampfangereicherten Strom (45) mit einem über die Zeit durchschnittlichen Massefußrate, F1, und einen teilweise flüssigkeitsangereicherten Strom (42) mit einer über die Zeit durchschnittlichen Massenflussrate, F2;
   (d) Abkühlen des teilweise dampfangereicherten Stroms (45) auf eine Temperatur die von 0°C bis 10°C Oder von 2°C bis 7°C reicht, um H2O in dem mit Dampf teilangereicherten Strom zu kondensieren;
   (e) Entfernen wenigstens eines Teils der kondensierten H2O (62) aus dem mit Dampf teilangereicherten Strom (45) von Schritt (d);
   (f) Leiten des teilweise dampfangereicherten Strom (45) von Schritt (e) zu einer Ammoniak-Entfernungseinheit (70) um NH3 aus dem mit Dampf teilangereicherten Strom (45) zu entfernen; und
   (g) Leiten wenigstens eines ersten Teils (85) des mit Dampf teilangereicherten Stroms (45) von Schritt (f) zu einem chemischen Komponentenanalyser (90), um den Kohlenwasserstoffgehalt in dem wenigstens ersten Teil (85) mit Dampf teilangereicherten Stroms (45) zu messen.

2. Verfahren nach Anspruch 1, wobei der mit Dampf teilangereicherte Strom von Schritt (f) einem Trockner zugeführt wird um H2O in der dem mit Dampf teilangereicherten Strom zu entfernen, bevor der wenigstens erste Teil des mit Dampf teilangereicherten Stroms dem chemischen Komponentenanalyser zugeleitet wird.

3. Verfahren nach Anspruch 1 oder 2, wobei F1 und F2 so kontrolliert werden, dass $\frac{F1}{F1+F2} \le 0.2$.

4. Verfahren nach einem der Ansprüche 1 bis 3 weiterhin umfassend das Leiten des reformierten Stichprobenstroms (11) durch eine Leitung von einer Quelle für den reformierten Stickprobenstrom zu dem ersten Wärmetauscher (40) wobei der reformierte Stichprobenstrom (11) in der Leitung in einem genügenden Ausmaß erhitzt wird, um eine Kondensation von H2O in dem reformierten Stickprobenstrom innerhalb der Leitung zu verhindern.

5. Verfahren nach einem der Ansprüche 1 bis 4, wobei der wenigstens eine Teil des kondensierten H2O (62) aus dem mit Dampf teilangereicherten Strom über einen Flüssigkeitsablauf (65) entfernt wird.

6. Verfahren nach einem der Ansprüche 1 bis 4, wobei der wenigstens eine Teil des kondensierten H2O (62) aus dem mit Dampf teilangereicherten Strom über einen Flüssigkeitsablauf (65) und einen Filmbildungsfilter entfernt wird.

7. Verfahren nach einem der Ansprüche 1 bis 6, wobei die Ammoniakentfernungseinheit Phosphorsäure umfasst.

8. Verfahren nach einem der Ansprüche 1 bis 7 ferner umfassend: Zurückweisen eines zweiten Teils (82) des mit Dampf teilangereicherten Stroms (45) von Schritt (f) wobei der zweite Teil nicht dem chemischen Komponentenanalyser (90) zugeführt wird, wobei der wenigstens eine erste Teil (85) des mit Dampf teilangereicherten Stroms (45) einen über die Zeit durchschnittlichen Massefluss V1, der zweite Teil des mit Dampf teilangereicherten Stroms einen über die Zeit durchschnittlichen Massefluss V2 hat, wobei $\frac{V1}{V1+V2} \le 0.1$. 0.1.

9. Verfahren nach einem der Ansprüche 1 bis 8, wobei der mit Dampf teilangereicherten Strom im Schritt (d) in einem zweiten Wärmetauscher gekühlt wird, wobei der zweite Wärmetauscher ein Wirbelröhre umfasst, wobei Druckluft in die Wirbelröhre eingegeben wird, um das Kühlen des mit Dampf teilangereicherten Stroms zu bewirken.

10. Verfahren nach einem der Ansprüche 1 bis 9, wobei der Trockner ein Membrantrockner ist.

11. Verfahren nach Anspruch 10, wobei trockenes N2 oder trockene Luft in den Membrantrockner (80) als ein Spülgas eingegeben wird, um das Entfernen von H2O aus dem mit Dampf teilangereicherten Strom zu entfernen.

12. Verfahren nach einem der Ansprüche 1 bis 11, wobei der reformierte Stichprobenstrom (11) eine H2O Molfraktion hat, die größer als 0.35 oder größer als 0.5 ist.

13. Verfahren nach einem der Ansprüche 1 bis 12, wobei der chemische Komponentenanalyser ein Gaschromatograph ist.

**Revendications**

1. Procédé de caractérisation d'une teneur en hydrocarbures d'un courant d'échantillon de reformat (11), le procédé comprenant :

> (a) le retrait du courant d'échantillon de reformat (11) à partir d'un procédé de reformage d'hydrocarbures à la vapeur d'eau, la courant d'échantillon de reformat (11) comprenant du $CH_4$, de l'$H_2O$, du CO, du $NH_3$, et de l'$H_2$ ;
> (b) le refroidissement du courant d'échantillon de reformat (11) dans un premier échangeur de chaleur (40) pour condenser une partie de l'$H_2O$ dans le courant d'échantillon de reformat (11) pour ainsi former une fraction de liquide et une fraction de vapeur ;
> (c) la division du courant d'échantillon de reformat provenant de l'étape (b) en un courant enrichi en fraction de vapeur (45) présentant un débit massique moyenné dans le temps, $F_1$, et en un courant enrichi en fraction de liquide (42) présentant un débit massique moyenné dans le temps, $F_2$ ;
> (d) le refroidissement du courant enrichi en fraction de vapeur (45) jusqu'à une température située dans la plage allant de 0 °C à 10 °C ou dans la plage allant de 2 °C à 7 °C pour condenser l'$H_2O$ dans le courant enrichi en fraction de vapeur ;
> (e) le retrait d'au moins une partie de l'$H_2O$ condensée (62) à partir du courant enrichi en fraction de vapeur (45) provenant de l'étape (d) ;
> (f) le passage du courant enrichi en fraction de vapeur (45) provenant de l'étape (e) dans une unité d'élimination d'ammoniac (70) pour éliminer le $NH_3$ à partir du courant enrichi en fraction de vapeur (45) ; et
> (g) le passage d'au moins une première partie (85) du courant enrichi en fraction de vapeur (45) provenant de l'étape (f) dans un analyseur de composant chimique (90) pour mesurer la teneur en hydrocarbures dans l'au moins une première partie (85) du courant enrichi en fraction de vapeur (45).

2. Procédé selon la revendication 1 dans lequel le courant enrichi en fraction de vapeur provenant de l'étape (f) est passé dans un sécheur pour éliminer davantage l'$H_2O$ dans le courant enrichi en fraction de vapeur avant le passage de l'au moins une première partie du courant enrichi en fraction de vapeur dans l'analyseur de composant chimique.

3. Procédé selon la revendication 1 ou la revendication 2 dans lequel $F_1$ et $F_2$ sont régulés de façon que

$$\frac{F_1}{F_1 + F_2} \leq 0{,}2 \, .$$

4. Procédé selon l'une quelconque des revendications 1 à 3 comprenant en outre le passage du courant d'échantillon de reformat (11) à travers une conduite depuis une source de courant d'échantillon de reformat vers le premier échangeur de chaleur (40) tout en chauffant le courant d'échantillon de reformat (11) dans la conduite dans une quantité suffisante pour empêcher la condensation de l'$H_2O$ dans le courant d'échantillon de reformat dans la conduite.

5. Procédé selon l'une quelconque des revendications 1 à 4 dans lequel l'au moins une partie de l'$H_2O$ condensée (62) provenant du courant enrichi en fraction de vapeur est éliminée en utilisant un purgeur de liquide (65).

6. Procédé selon l'une quelconque des revendications 1 à 4 dans lequel l'au moins une partie de l'$H_2O$ condensée (62) provenant du courant enrichi en fraction de vapeur est éliminée en utilisant un purgeur de liquide (65) et un filtre coalescent.

7. Procédé selon l'une quelconque des revendications 1 à 6 dans lequel l'unité d'élimination d'ammoniac comprend de l'acide phosphorique.

8. Procédé selon l'une quelconque des revendications 1 à 7 comprenant en outre : le rejet d'une seconde partie (82) du courant enrichi en fraction de vapeur (45) provenant de l'étape (f) où la seconde partie n'est pas passée dans l'analyseur de composant chimique (90), dans lequel l'au moins une première partie (85) du courant enrichi en fraction de vapeur (45) présente un débit massique moyenné dans le temps $V_1$, la seconde partie du courant enrichi en fraction de vapeur présente un débit massique moyenné

$$\frac{V_1}{V_1 + V_2} \le 0{,}1.$$

dans le temps, où

9. Procédé selon l'une quelconque des revendications 1 à 8 dans lequel le courant enrichi en fraction de vapeur est refroidi dans l'étape (d) dans un second échangeur de chaleur dans laquelle le second échangeur de chaleur comprend un tube vortex dans lequel de l'air comprimé est introduit dans le tube vortex pour fournir le refroidissement du courant enrichi en fraction de vapeur.

10. Procédé selon l'une quelconque des revendications 1 à 9 dans lequel le sécheur est un sécheur à membrane.

11. Procédé selon la revendication 10 dans lequel du $N_2$ sec ou de l'air sec est introduit dans le sécheur à membrane (80) en tant que gaz de purge pour faciliter l'élimination de l'$H_2O$ à partir du courant enrichi en fraction de vapeur (45).

12. Procédé selon l'une quelconque des revendications 1 à 11 dans lequel le courant d'échantillon de reformat (11) présente une fraction molaire en $H_2O$ supérieure à 0,35 ou supérieure à 0,5.

13. Procédé selon l'une quelconque des revendications 1 à 12 dans lequel l'analyseur de composant chimique est un chromatographe en phase gazeuse.

FIG.

**EP 3 018 473 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100224834 A1